(19) Europäisches Patentamt
European Patent Office
Office européen des brevets

(11) **EP 1 764 562 A1**

(12) **EUROPÄISCHE PATENTANMELDUNG**

(43) Veröffentlichungstag:
**21.03.2007 Patentblatt 2007/12**

(51) Int Cl.:
*F24D 11/00* (2006.01)   *F24D 19/10* (2006.01)

(21) Anmeldenummer: 05020304.1

(22) Anmeldetag: **16.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **RWE Fuel Cells GmbH**
**45128 Essen (DE)**

(72) Erfinder: **van de Braak, Georg**
**50823 Köln (DE)**

(74) Vertreter: **Kierdorf, Theodor**
**Patentanwalt**
**Braunsberger Feld 29**
**51429 Bergisch Gladbach (DE)**

(54) **Verfahren zum Betrieb wenigstens einer Brennstoffzellenanordnung in einem Heizungssystem**

(57)    Die Erfindung betrifft ein Verfahren zum Betrieb einer Brennstoffzellenanordnung in einem Heizsystem mit wenigstens einem weiteren Heizgerät. Das Verfahren umfasst die Erfassung von Messwerten für die thermische und elektrische Last des zu versorgenden Objekts zur Erstellung einer Lastprognose in vorgegebenen Zeitintervallen über einen bestimmten Zeitraum. Innerhalb der Zeitintervalle wird die thermische und elektrische Last des Objekts als konstant angenommen. Aufgrund der prognostizierten Last in den einzelnen Zeitintervallen werden die Betriebskosten und die zu erzielende Einspeisevergütung ermittelt. Die Sollwerte für die Regelung der Brennstoffzellenanordnung und des Heizgeräts werden mit einer mathematischen Optimierungsfunktion im Hinblick einer Betriebskostenreduzierung über den gesamten Zeitraum ermittelt und als Führungsgröße für die Regelung der Geräte verwendet.

EP 1 764 562 A1

**Beschreibung**

Die Erfindung betrifft ein Verfahren zum Betrieb wenigstens einer Brennstoffzellenanordnung in einem Heizungssystem mit wenigstens einem weiteren Heizgerät.

Ein Verfahren zum Betrieb einer Brennstoffzelle in einem Heizungssystem ist beispielsweise aus der DE 199 51 216 A1 bekannt. Brennstoffzellenanordnungen erzeugen sowohl thermische als auch elektrische Energie, wobei die elektrische Energie in das öffentliche Netz eingespeist wird. Anders als beim Betrieb von Solarstromanlagen ist der Betrieb von Brennstoffzellen mit dem Einsatz von Primärenergie verbunden, wodurch die Betriebskosten höher sind. Ein Brennstoffzellensystem produziert elektrische Energie und Wärme und wird in einem konventionellen Heizungssystem üblicherweise so betrieben, dass die vom Brennstoffzellensystem erzeugte Wärme als Heizwärme und/oder zur Erzeugung von warmem Trinkwasser genutzt werden kann, die konventionelle Wärmequelle des Heizungssystems kann ein gas- oder ölbefeuertes Heizgerät sein. Die von der Brennstoffzellenanordnung erzeugte elektrische Energie wird entweder in das öffentliche Netz eingespeist, wie vorstehend erwähnt, oder sie substituiert den Strombezug der Verbraucher des mit Energie zu versorgenden Objekts.

Da, wie eingangs erwähnt, der Betrieb einer Brennstoffzelle mit dem Einsatz von Primärenergie verbunden ist, ist bei dem Betrieb der Brennstoffzellenanordnung abzuwägen, wie sich die Kosten für das eingesetzte Brenngas im Verhältnis zur Substitution des Strombezugs vom öffentlichen Netz und der Einspeisevergütung für den Überschussstrom in das öffentliche Netz verhalten. Der Wirkungsgrad und damit die Wirtschaftlichkeit eines Brennstoffzellen-Systems hängt stark von dessen Betriebszustand ab.

Darüber hinaus ist ein taktender Betrieb der Brennstoffzellenanordnung möglichst zu vermeiden, da das Anfahren der Brennstoffzellenanordnung den Verschleiß des üblicherweise vorhandenen Reformers fördert und mit zusätzlichen Energiekosten behaftet ist. Solche lebensdauerverringernden Schaltvorgänge stellen einen nicht unbeachtlichen Kostenfaktor beim Betrieb einer Brennstoffzellenanordnung dar, was bei bekannten Verfahren zur Regelung von Brennstoffzellen teilweise nur unzureichend berücksichtigt ist.

Das in der DE 100 51 216 beschriebene Verfahren zeichnet sich dadurch aus, dass die Brennstoffzellenanordnung in Abhängigkeit vom momentanen Leistungsbedarf des Hausnetzes (stromgeführt) geregelt wird. Hierdurch wird ein Einsatz von Primärenergie in einem die Deckung des Bedarfs an elektrischer Energie des zu versorgenden Objekts hinausgehenden Ausmaß vermieden. Eine stromgeführte Steuerung des Brennstoffzellensystems berücksichtigt nicht die jahreszeitlich stark schwankenden und unterschiedlichen Anforderungen von thermischer und elektrischer Energie.

Der Erfindung liegt daher die Aufgabe zugrunde, ein Verfahren zur Regelung einer Brennstoffzellenanordnung in einem Heizungssystem bereitzustellen, welchem die Lasten des zu versorgenden Objekts unter optimaler Ausnutzung der Brennstoffzellenanordnung zu jeder Zeit gedeckt sind, insbesondere unter Berücksichtigung der Betriebskosten der Brennstoffzellenanordnung.

Die Aufgabe wird gelöst durch ein Verfahren zum Betrieb wenigstens einer Brennstoffzellenanordnung in einem Heizungssystem mit wenigstens einem weiteren Heizgerät, welches sich dadurch auszeichnet, dass die Leistung der Brennstoffzellenanordnung und des Heizgeräts jeweils in Abhängigkeit einer in vorgegebenen Zeitintervallen prognostizierten thermischen und elektrischen Last des zu versorgenden Objekts unter Berücksichtigung der Betriebskosten und der zu erzielenden Einspeisevergütung geregelt wird.

Die Erfindung sieht mit anderen Worten vor, für eine bestimmte Anzahl an vorgegebenen Zeitintervallen über einen vorgewählten Zeitraum Prognosen für die elektrische und thermische Last des zu versorgenden Objekts zu erstellen und die Betriebszustände der Brennstoffzellenanordnung und des Heizungsgeräts jeweils in Abhängigkeit der prognostizierten Last zu schalten bzw. zu regeln, wobei derjenigen Leistungseinstellung der Vorzug gegeben wird, die nach Gegenüberstellung von Betriebskosten des gesamten Objekts einerseits und Einspeisevergütung andererseits die günstigste ist. Diese Verfahrensweise hat einerseits den Vorzug, dass Schaltvorgänge für die Brennstoffzellenanordnung vorhersehbar sind, so dass lebensdauerverringernde kurze Schaltvorgänge vermieden werden können, andererseits können so die jeweils günstigsten Betriebsbedingungen für die einzelnen Geräte des Heizungssystems ermittelt werden.

Bei einer bevorzugten Variante des erfindungsgemäßen Verfahrens werden der Betriebszustand der Brennstoffzellenanordnung und des weiteren Heizgeräts in Abhängigkeit des Ergebnisses einer mathematischen Optimierungsrechnung unter Einhaltung von Nebenbedingungen für die Betriebszustände des Heizgeräts und der Brennstoffzellenanordnung geregelt. Als Nebenbedingungen kommen beispielsweise die Einschränkungen für die möglichen Betriebszustände des Heizgeräts und der Brennstoffzellenanordnung in Betracht. Sofern das Heizungssystem mit einem Pufferspeicher betrieben wird, muss dessen Inhalt bilanziert werden und es müssen die Grenzen für den Energieinhalt des Pufferspeichers eingehalten werden. Außerdem kann als Nebenbedingung formuliert werden, dass keine Speicherung von Wärme aus dem Heizgerät erfolgt.

Besonders zweckmäßig ist es, wenn die Ein- und Ausschaltvorgänge der Brennstoffzellenanordnung als Betriebskosten in der Optimierungsfunktion abgebildet sind. Auf diese Art und Weise lässt sich eine Vermeidung von Schaltvorgängen indirekt über die in der Optimierungsfunktion hinterlegte Kostenfunktion erreichen.

Die Regelung erfolgt vorzugsweise unter Berücksichtigung des Energieinhalts eines Pufferspeichers für die thermische Energie der Brennstoffzellenanordnung.

Zur Erzeugung von Prognosedaten können die thermischen und elektrischen Lasten des zu versorgenden Objekts mittels einer Mess- und Auswerteeinrichtung über einen vorgegebenen Zeitraum erfasst und gegebenenfalls unter Berücksichtigung zusätzlicher lastrelevanter Parameter herangezogen werden.

Für die Ermittlung der Schaltzustände der Brennstoffzellenanordnung kann die prognostizierte thermische und elektrische Last während vorgegebener Zeitintervalle innerhalb des prognostizierten Zeitraums als konstant angenommen werden.

Die Regelung kann so vorgenommen werden, dass die Nebenbedingungen der Optimierungsrechnung für jedes Zeitintervall des Prognosezeitraums erfüllt sein müssen.

Zweckmäßigerweise wird das Ergebnis der Optimierungsrechnung für jedes Zeitintervall als Sollgröße der Brennstoffzellenanordnung und des Heizgeräts verwendet, wobei die Betriebszustände der Brennstoffzellenanordnung und des Heizgeräts über eine Steuereinrichtung geschaltet werden, die die Sollgrößen als Führungsgrößen für die Betriebszustände der Brennstoffzellenanordnung und des Heizgeräts verwendet. Interne Regelungen beider Geräte (z. B. Sicherheitsaspekte) oder die Einhaltung der realen und nicht prognostizierten Wärmeanforderung des Objektes haben Vorrang vor diesen Führungsgrößen.

Das Verfahren umfasst die Erfassung von Messwerten für die thermische und elektrische Last des zu versorgenden Objekts zur Erstellung einer Lastprognose in vorgegebenen Zeitintervallen über einen bestimmten Zeitraum. Innerhalb der Zeitintervalle wird die thermische und elektrische Last des Objekts als konstant angenommen. Aufgrund der prognostizierten Last in den einzelnen Zeitintervallen werden die Sollwerte für die Regelung der Brennstoffzellenanordnung und des Heizgeräts mit einer mathematischen Optimierungsrechnung über den gesamten Zeitraum ermittelt und als Führungsgröße für die Regelung der Geräte verwendet. Dabei werden diejenigen Betriebszustände der Brennstoffzellenanordnung und des Heizgeräts ermittelt, die unter der angenommenen Last am kostengünstigsten sind.

Nachstehend wird die Erfindung anhand eines Ausführungsbeispiels erläutert. Für die Steuerung der Brennstoffzellenanordnung und des Heizgeräts wird zunächst ein Zeitraum festgelegt, der in bestimmte Zeitintervalle aufgeteilt wird. Für die Zwecke einer nachstehend wiedergegebenen Beispielrechnung wird ein Zeitraum von 12 Stunden betrachtet, der in Zeitintervalle von jeweils 3 Stunden Länge aufgeteilt wird. Der Zeitraum von 12 Stunden ist für die praktische Anwendung zu klein, die Zeitintervalle von 3 Stunden Länge sind hingegen für die praktische Anwendung zu groß, diese Einteilung wurde nur zur Vereinfachung der Beispielrechnung gewählt.

Für die Länge der Zeitintervalle sind die Betriebszustände der Brennstoffzellenanordnung und des Heizgeräts konstant. In einem betrachteten Zeitintervall liefert das um die Brennstoffzellenanordnung erweiterte Heizsystem die Wärme, die das zu beliefernde Objekt anfordert. Diese Wärme kann direkt durch die Brennstoffzellenanordnung und/oder das Heizgerät erzeugt oder aber aus einem Pufferspeicher entnommen werden, sofern dieser verfügbare Wärme enthält. Produziert die Brennstoffzellenanordnung mehr Wärme als das Objekt in dem festgelegten Zeitintervall abnimmt, so wird die Wärme in dem Pufferspeicher gespeichert. Die Lasten des Objekts können in unterschiedlichen Kombinationen von den Betriebszuständen sowohl der Brennstoffzellenanordnung als auch des Heizgeräts gedeckt werden. Falls beide Geräte zusammen zu viel Wärme produzieren, wird die Wärme im Pufferspeicher gespeichert, falls beide Geräte zusammen zu wenig Wärme produzieren, wird dem Pufferspeicher Wärme entnommen.

Mittels einer Messeinrichtung wird die thermische und elektrische Last des Objekts über einen bestimmten Zeitraum ermittelt und gegebenenfalls unter Berücksichtigung zusätzlicher Parameter (Feiertage, Jahreszeitinformation etc.) in Prognosedaten umgerechnet. Die beim Betrieb des Heizungssystems entstehenden Kosten, wie beispielsweise Gasverbrauch, Bezug von elektrischer Energie, Abnutzung und Wartung sowie die beispielsweise durch Stromeinspeisung zu erzielenden Einspeiseerlöse werden in einer Kostenfunktion abgebildet. Der Bezug von elektrischer Energie vom öffentlichen Netz für das gesamte Objekt wird ebenfalls bei dieser Kostenfunktion berücksichtigt. Die Kostenfunktion berücksichtigt die Betriebszustände der einzelnen Geräte und die Kosten werden sodann unter Einbeziehung der Prognosedaten in einen mathematischen Zusammenhang gebracht, die Systemeigenschaften und Bedingungen werden als mathematische Nebenbedingungen eingefügt.

Betrachtet man ein einzelnes Zeitintervall, so kann man in diesem Zeitintervall die Brennstoffzellenanordnung und das Heizgerät in verschiedenen Zuständen betreiben. Die Wahl der Zustände unterliegt folgenden Nebenbedingungen:

- Die elektrische Last und die Wärmelast des Objekts müssen gedeckt werden.
- Der gewählte Betriebszustand des jeweiligen Geräts darf eine minimal oder eine maximal mögliche Leistung nicht verletzen.
- Es wird im betrachteten Zeitintervall Wärme aus dem Pufferspeicher entnommen oder dort gespeichert, je nach Betriebszustand beider Geräte und nach Lastanforderung.

Der Pufferspeicher muss die Wärme in diesem Zeitintervall enthalten bzw. darf einen maximal möglichen Energieinhalt nicht überschreiten, andernfalls sind die gewählten Betriebszustände nicht zulässig.

Erforderlichenfalls darf die Betriebsleistung des Heizgeräts die Last des Objekts nicht übersteigen.

Es können für jedes Zeitintervall des gesamten Zeitraums unabhängig die Betriebszustände in der Brennstoffzellenanordnung und des Heizgeräts variiert werden, sofern die Nebenbedingungen in jedem Zeitintervall eingehalten werden.

Für die unterschiedlichen Betriebszustände des Heizgeräts und der Brennstoffzellenanordnung ergeben sich unterschiedliche Betriebskosten, abhängig von dem Betriebspunkt und dem Wirkungsgrad des Geräts. Zu den Betriebskosten zählen zusätzlich die Kosten für den Verschleiß und/oder die Schaltvorgänge der Geräte sowie für den Strombezug aus dem Stromnetz. In einer Funktion für die Gesamtkosten werden die Betriebskosten beider Geräte für alle Zeitintervalle zusammengefasst. Zusätzlich wird in dieser Funktion der Wärmeinhalt des Pufferspeichers zu Beginn und zum Ende des betrachteten gesamten Zeitraums verrechnet. Wird der Zeitraum beispielsweise in 24 Zeitintervalle aufgeteilt, erhält man 24 Variablen für die Brennstoffzellenanordnung und 24 Variablen für das Heizgerät, das heißt insgesamt 48 Variablen. Die Nebenbedingungen werden für jedes Zeitintervall separat betrachtet. Für jede Variable gibt es eine Bedingung für die minimale Leistung und eine Bedingung für die maximale Leistung jeweils für jedes Zeitintervall. Zudem gibt es für den Pufferspeicher zu jedem Intervall die Bedingung, dass die enthaltene Energie einen minimalen und einen maximalen Wert nicht überschreiten darf. Die enthaltene Energie erhält man aus einer Bilanzrechnung, in die die Betriebszustände beider Geräte und die Last des Objekts eingehen. Insgesamt liegen bei 24 Zeitintervallen 96 Nebenbedingungen für die Geräte und 48 Nebenbedingungen für den Pufferspeicher vor. Insgesamt ergeben sich 144 Nebenbedingungen. Die Kostenfunktion beinhaltet für jedes der 24 Zeitintervalle jeweils alle Kosten, die den Betriebszuständen zugeordnet werden können.

Für die Lösung dieses mathematischen Problems sind für den Fachmann standardisierte Algorithmen am Markt verfügbar, so dass auf die Einzelheiten hierzu im weiteren nicht eingegangen wird.

Als Ergebnis einer so vorgenommenen Betriebskostenminimierung ergeben sich Sollgrößen für die Betriebszustände des Heizgeräts in jedem betrachteten Zeitintervall, die als Führungsgrößen in einem Steuergerät in entsprechende Schaltbefehle für die Brennstoffzellenanordnung und das Heizgerät umgesetzt werden.

Wie vorstehend erläutert, wird im Folgenden eine Beispielrechnung vorgestellt, bei der als gesamter Zeitraum ein Abschnitt von 12 Stunden betrachtet wird, der in Zeitintervalle von 3 Stunden Länge aufgeteilt wird.

Dabei werden folgende Abkürzungen verwendet:

| Abkürzung | Bedeutung |
|---|---|
| $t_i$ | Zeitintervall $t_i$, i=1..n, die Vereinigung $[t_1,.., t_n]$ beschreibt den gesamten betrachteten Zeitraum |
| dt | Länge von $t_i$ |
| PWLO | Prognose der Wärmelast des Objektes, abhängig von $t_i$: PWLO($t_i$) |
| PELO | Prognose der elektrischen Last des Objekts, abh. von $t_i$: PELO ($t_i$) |
| XHG | Betriebszustand des Heizgerätes, abhängig von $t_i$:XHG ($t_i$) |
| XBZ | Betriebszustand des BZ-Gerätes, abhängig von $t_i$:XBZ ($t_i$) |
| WBZ | Wärme, erzeugt vom BZ-System, abhängig von XBZ: WBZ(XBZ($t_i$)) |
| WHG | Wärme, erzeugt vom Heizgerät, abhängig von XHG: WHG(XHG(t;)) |
| QPS | Energieinhalt des PSp im Zeitintervall $t_i$ (erzeugte und verbrauchte Leistungen werden als positiv berechnet): [QPS(WBZ($t_i$), WHG($t_i$), PWLO($t_i$)) = QPS($t_{i-1}$) + [WBZ($t_i$)+WHG($t_i$)-PWLO($t_i$)]* dt |
| GK | Gesamtkosten im Zeitintervall ti (Summe aller Kosten und Erlöse für den Betrieb des Heizungssystems im Zeitintervall $t_i$) GK($t_i$,PWLO($t_i$),PELO($t_i$), XHG($t_i$), XBZ($t_i$)) |
| KQPS_t0 | Kosten des anfänglichen Energieinhalts des Pufferspeichers |
| GQPS | Erlös durch Vergütung des Energieinhalts des Pufferspeichers am Ende des betrachteten Zeitraums, abhängig XHG und XBZ für alle $t_i$ |
| XHG_Min | Minimaler Betriebszustand des Heizgerätes |
| XHG_Max | Maximaler Betriebszustand des Heizgerätes |
| 0 | Bezeichnet ein ausgeschaltetes Gerät |
| XBZ_Min | Minimaler Betriebszustand des BZ-Systems |
| XBZ_Max | Maximaler Betriebszustand des BZ-Systems |

(fortgesetzt)

| Abkürzung | Bedeutung |
|---|---|
| QPS_Min | Minimaler Energieinhalt des Pufferspeichers |
| QPS_Max | Maximaler Energieinhalt des Pufferspeichers |
| $QPS(t_0)$ | Inhalt des Pufferspeichers bei Beginn der Berechnung |

Es ergibt sich folgendes mathematisches Optimierungsproblem:

$$\min_{\substack{XHG(ti),XBZ(ti),\\ i=1..n}} \left[ KQPS\_t0 - GQPS(XHG, XBZ) + \sum_{i=1}^{n} GK(ti, PWLO(ti), PELO(ti), XHG(ti), XBZ(ti)) \right]$$

unter Einhaltung der Nebenbedingungen:

Einschränkung für den Betriebszustand des Heizgerätes:

$$XHG\_Min \leq XHG(t_i) \leq XHG\_Max \text{ oder } XHG(t_i) = 0 \text{ für alle } i=1..n$$

Keine Speicherung von Wärme aus dem Heizgerät im Pufferspeicher:

$$XHG(t_i) \leq WLO(t_i) \text{ für alle } i=1..n$$

Einschränkung für den Betriebszustand des BZ-Systems:

$$XBZ\_Min \leq XBZ(t_i) \leq XBZ\_Max \text{ oder } XBZ(ti) = 0 \text{ für alle } i=1..n$$

Bilanzrechnung für den Pufferspeicher für alle Zeitintervalle ti:

$$QPS(t_1) = QPS(t_0) + [WBZ(t_1) + WHG(t_1) - PWLO(t_1)]^* dt$$

...

$$QPS(t_n) = QPS(t_{n-1}) + [WBZ(t_n) + WHG(t_n) - PWLO(t_n)]^* dt$$

Einhaltung der Grenzen für den Energieinhalt des Pufferspeichers:

$$QPS\_Min \leq QPS(t_i) \leq QPS\_Max \text{ für alle } i=1..n$$

Es ergibt sich für den betrachteten Zeitraum folgende Modellierung:

$t_1$:     Zeitintervall von 00:00 Uhr - 03:00 Uhr
...
$t_4$:     Zeitintervall von 09:00 Uhr - 12:00 Uhr
dt     Dauer eines Zeitintervalls: 3 Stunden
$GK(t_i)$:     Gesamtkosten im Zeitintervall $t_i$. Diese werden nicht weiter erläutert, sie umfassen den Gasbezug, Strombezug des Objektes, Stromeinspeisung und sonstige Kosten im Zeitintervall $t_i$.

Das Optimierungsproblem:

$$\min_{\substack{XHG(ti),XBZ(ti),\\ i=1..n}} \left[ \begin{array}{l} KQPS\_t0 - GQPS(XHG(t_1),..XHG(t_4), XBZ(t_1),...XBZ(t_4)) \\ + GK(t_1) + GK(t_2) + GK(t_3) + GK(t_4) \end{array} \right]$$

unter Einhaltung der Nebenbedingungen:

Einschränkung für den Betriebszustand des Heizgerätes:

$XHG\_Min \leq XHG(t_1) \leq XHG\_Max$ oder $XHG(t_1) = 0$
$XHG\_Min \leq XHG(t_2) \leq XHG\_Max$ oder $XHG(t_2) = 0$
$XHG\_Min \leq XHG(t_3) \leq XHG\_Max$ oder $XHG(t_3) = 0$
$XHG\_Min \leq XHG(t_4) \leq XHG\_Max$ oder $XHG(t_4) = 0$

Keine Speicherung von Wärme aus dem Heizgerät:

$XHG(t_1) \leq WLO(t_1)$
$XHG(t_2) \leq WLO(t_2)$
$XHG(t_3) \leq WLO(t_3)$
$XHG(t_4) \leq WLO(t_4)$

Einschränkung für den Betriebszustand des BZ-Systems:

$XBZ\_Min \leq XBZ(t_1) \leq XBZ\_Max$ oder $XBZ(t_1) = 0$
$XBZ\_Min \leq XBZ(t_2) \leq XBZ\_Max$ oder $XBZ(t_2) = 0$
$XBZ\_Min \leq XBZ(t_3) \leq XBZ\_Max$ oder $XBZ(t_3) = 0$
$XBZ\_Min \leq XBZ(t_4) \leq XBZ\_Max$ oder $XBZ(t_4) = 0$

Bilanzrechnung für den Pufferspeicher:

$QPS(t_1) = QPS(t_0) + [WBZ(t_1) + WHG(t_1) - PWLO(t_1)]* dt$
$QPS(t_2) = QPS(t_1) + [WBZ(t_2) + WHG(t_2) - PWLO(t_2)]* dt$
$QPS(t_3) = QPS(t_2) + [WBZ(t_3) + WHG(t_3) - PWLO(t_3)]* dt$
$QPS(t_4) = QPS(t_3) + [WBZ(t_4) + WHG(t_4) - PWLO(t_4)]* dt$

Einhaltung der Grenzen für den Energieeinhalt des Pufferspeichers:

$QPS\_Min \leq QPS(t_1) \leq QPS\_Max$
$QPS\_Min \leq QPS(t_2) \leq QPS\_Max$
$QPS\_Min \leq QPS(t_3) \leq QPS\_Max$
$QPS\_Min \leq QPS(t_4) \leq QPS\_Max$

Nach Vorgabe jeweils eines Startwertes für die acht Betriebszustände ergibt sich nach einer Beispielrechnung folgende Lösung F für den oben gewählten Zeitraum:

**Betriebskosten insgesamt [€]: -8.6105**

| Parameter | Variable: | |
|---|---|---|
| Länge des Zeitintervalls [s] | dt | 10800 |
| Gaspreis mit Steuern [€/kWh] | | 0,033 |
| Gaspreis ohne Steuern [€/kWh] | | 0,028 |
| Strompreis [€/kWh] | | 0,15 |
| Einspeisevergütung [€/kWh] | | 0,08 |
| Kosten für den Verschleiß des BZ-Systems [€/kWh] | | 0,1 |
| Energieinhalt des Pufferspeichers bei t0 [kWh] | QPS(t0) | 20 |
| Max. Energieinhalt des Pufferspeichers [kWh] | QPS_Max | 40 |
| Min. Energieinhalt des Pufferspeichers [kWh] | QPS_Min | 0 |

| Intervall | | t1 | t2 | t2 | t3 |
|---|---|---|---|---|---|
| Prognose der elektr. Last des Objekts [W] | PELO | 1000 | 1000 | 3000 | 1500 |
| Prognose der thermischen Last des Objekts [W] | PWLO | 8000 | 8000 | 30000 | 10000 |

(fortgesetzt)

| Intervall | | t1 | t2 | t2 | t3 |
|---|---|---|---|---|---|
| **Betriebszustand des BZ-Systems [W]** | **XBZ** | **1000** | **1000** | **3000** | **1500** |
| **Betriebszustand des Heizgerätes [W]** | **XHG** | **4116** | **8000** | **19826** | **10000** |
| Thermische Leistung des BZ-Systems [W] | WBZ | 1667 | 1667 | 5000 | 2500 |
| Gewinn durch Stromeinspeisung [€] | | 0,00 | 0,00 | 0,00 | 0,00 |
| Kosten durch Gasbezug des BZ-Systems [€] | | -0,31 | -0,31 | -0,92 | -0,46 |
| Kosten für den Verschleiß des BZ-Systems [€] | | -0,30 | -0,30 | -0,90 | -0,45 |
| Kosten durch Gasbezug des Heizgerätes [€] | | -0,50 | -0,97 | -2,40 | -1,21 |
| Kosten für den Strombezug vom Netz | | 0,00 | 0,00 | 0,00 | 0,00 |
| **Summe aller Kosten** | **GK** | **-1,11** | **-1,58** | **-4,22** | **-2,12** |
| Wärmefluss am Pufferspeicher [W] (für je 3h Dauer) | | -2218 | 1667 | -5174 | 2500 |
| **Energieinhalt des Pufferspeichers [kWh]** | **QPS** | **13,3** | **18,3** | **2,8** | **10,3** |

## Patentansprüche

1. Verfahren zum Betrieb wenigstens einer Brennstoffzellenanordnung in einem Heizungssystem mit wenigstens einem weiteren Heizgerät, **dadurch gekennzeichnet, dass** die Leistung der Brennstoffzellenanordnung und des Heizgeräts jeweils in Abhängigkeit einer in vorgegebenen Zeitintervallen prognostizierten thermischen und elektrischen Last des zu versorgenden Objekts unter Berücksichtigung der Betriebskosten und der zu erzielenden Einspeisevergütung geregelt wird.

2. Verfahren nach Anspruch 1, **dadurch gekennzeichnet, dass** der Betriebszustand der Brennstoffzellenanordnung und des weiteren Heizgeräts in Abhängigkeit des Ergebnisses einer mathematischen Optimierungsrechnung unter Einhaltung von Nebenbedingungen für die Betriebszustände der Heizgeräte geregelt wird.

3. Verfahren nach Anspruch 1 oder 2, **dadurch gekennzeichnet, dass** die Ein- und Ausschaltvorgänge der Brennstoffzellenanordnung als Betriebskosten in der Optimierungsfunktion abgebildet sind.

4. Verfahren nach einem der Ansprüche 2 oder 3, **dadurch gekennzeichnet, dass** die Regelung unter Berücksichtigung des Energieinhalts eines Pufferspeichers für die thermische Energie der Brennstoffzellenanordnung erfolgt.

5. Verfahren nach einem der Ansprüche 1 bis 4, **dadurch gekennzeichnet, dass** die thermischen und elektrischen Lasten des zu versorgenden Objekts mittels einer Mess- und Auswerteeinrichtung über einen vorgegebenen Zeitraum erfasst und gegebenenfalls unter Berücksichtigung zusätzlicher lastrelevanter Parameter zur Erstellung einer Prognose herangezogen werden.

6. Verfahren nach einem der Ansprüche 1 bis 5, **dadurch gekennzeichnet, dass** die prognostizierte thermische und elektrische Last während eines vorgegebenen Zeitintervalls als konstant angenommen wird.

7. Verfahren nach einem der Ansprüche 1 bis 6, **dadurch gekennzeichnet, dass** die Nebenbedingungen der Optimierungsfunktion für jedes Zeitintervall des Prognosezeitraums erfüllt sein müssen.

8. Verfahren nach einem der Ansprüche 1 bis 7, **dadurch gekennzeichnet, dass** das Ergebnis der Optimierungsfunktion für jedes Intervall als Sollgröße für die Regelung der Brennstoffzellenanordnung und des Heizgeräts verwendet wird.

9. Verfahren nach einem der Ansprüche 1 bis 8, **dadurch gekennzeichnet, dass** die Betriebszustände der Brennstoffzellenanordnung und des Heizgeräts über eine Steuereinrichtung geschaltet werden, die die Sollgrößen als Führungsgrößen für die Betriebszustände der Brennstoffzellenanordnung und des Heizgeräts verwendet.

**Europäisches Patentamt**

## EUROPÄISCHER RECHERCHENBERICHT

Nummer der Anmeldung

EP 05 02 0304

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 5 467 265 A (YAMADA ET AL) 14. November 1995 (1995-11-14) * Spalte 1, Zeilen 1-6 * * Spalte 9, Zeilen 50-60 * ----- | 1-9 | F24D11/00 F24D19/10 |
| Y | DE 195 35 752 A1 (MUMM, PETER, DIPL.-ING., 17036 NEUBRANDENBURG, DE) 27. März 1997 (1997-03-27) * Zusammenfassung * ----- | 1-9 | |
| X | US 2002/082747 A1 (KRAMER ROBERT A) 27. Juni 2002 (2002-06-27) * Zusammenfassung * ----- | 1-9 | |
| A | EP 1 511 108 A (MATSUSHITA ELECTRIC INDUSTRIAL CO., LTD) 2. März 2005 (2005-03-02) * Zusammenfassung * ----- | 1-9 | |
| A,D | DE 199 51 216 A1 (JOH. VAILLANT GMBH U. CO) 20. April 2000 (2000-04-20) * Zusammenfassung * ----- | 1 | RECHERCHIERTE SACHGEBIETE (IPC) F24D |

Der vorliegende Recherchenbericht wurde für alle Patentansprüche erstellt

| Recherchenort | Abschlußdatum der Recherche | Prüfer |
|---|---|---|
| Den Haag | 8. März 2006 | Van Gestel, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 02 0304

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 5467265 | A | 14-11-1995 | DE | 4404272 A1 | 11-08-1994 |
| | | | JP | 6236202 A | 23-08-1994 |
| DE 19535752 | A1 | 27-03-1997 | KEINE | | |
| US 2002082747 | A1 | 27-06-2002 | US | 2004267408 A1 | 30-12-2004 |
| EP 1511108 | A | 02-03-2005 | CN | 1590742 A | 09-03-2005 |
| | | | US | 2005049757 A1 | 03-03-2005 |
| DE 19951216 | A1 | 20-04-2000 | AT | 411805 B | 25-05-2004 |
| | | | AT | 172898 A | 15-10-2003 |
| | | | CH | 693918 A5 | 15-04-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19951216 A1

- DE 10051216